# EUROPEAN PATENT SPECIFICATION

(11) **EP 4 112 703 B1**
(45) Date of publication and mention of the grant of the patent: **31.01.2024**
(21) Application number: 22182232.3
(22) Date of filing: 30.06.2022
(51) Int. Cl.: C10G 35/24

(54) **PROCESS FOR ESTIMATING NAPHTHA-REFORMING CATALYST PERFORMANCE**
VERFAHREN ZUR ABSCHÄTZUNG DER LEISTUNG EINES NAPHTHA-REFORMIERUNGSKATALYSATORS
PROCÉDÉ D'ÉVALUATION DE LA PERFORMANCE D'UN CATALYSEUR DE REFORMAGE DE NAPHTA

(30) Priority: 02.07.2021 EP 21183343
(43) Date of publication of application: 04.01.2023
(73) Proprietor: Avantium Technologies B.V., 1014 BV Amsterdam (NL)
(72) Inventor: POPOFF, Nicolas André Vélu, 1014 BV Amsterdam (NL)
(74) Representative: Avantium Intellectual Property

(56) References cited:
- CN-A- 109 201 093
- US-A- 5 552 035
- US-A1- 2016 059 199
- US-A1- 2019 015 819

## Description

### Introduction

The invention relates to a process for estimating catalyst performance of catalyst used in refinery reforming processes for converting naphtha to gasoline. More in particular, the catalyst to be investigated is subjected to analysis in parallel as a fixed bed, over time at a temperature to achieve a desired RON on yield of C5+, and takes into account coke deposition and the effects caused by it.

### Background of the invention

A significant part of petrochemical refining relates to naphtha to gasoline refining. Such refining employs a heterogeneous catalyst. A typical feature of such refining process is that coke (or carbon) deposits are formed on the catalyst particles, thereby partly deactivating the catalyst. As a result of this, such refining processes are carried out on an industrial scale using moving bed reactors, in which particles move through the reactor over time and away to a regeneration unit in which the coke deposits are removed, and back to the reactor. Such is also known as continuous catalytic regenerative (CCR) reforming process. CCR reforming units usually have 4 adiabatic reactors of different volumes and a dedicated regenerator tower that permits effective carbon burn-off of the catalysts, re-dispersion of the active metals, chloride addition and catalyst drying, before it is re-introduced again in the lead-reactor. To ensure that catalyst activity in the reactor is near fresh catalyst activity, catalyst circulation speed is maintained high and spent catalyst coke is usually maintained at less than 6 wt %, as is described by George J. Antos, Abdullah M. Aitani, Catalytic Naphtha Reforming, 2nd edition, (2004). The catalyst (usually a Pt-Sn / Al₂O₃ variant for the vast majority) is continuously circulated, from the lead-reactor inlet, to the lag-reactor outlet. At the exit the catalyst is severely deactivated by coke. High catalyst selectivity (C5+ yield) is always desired as long as product severity can be maintained.

Research is conducted to be able to investigate and compare performance of various catalysts. Catalyst research is often conducted in small reactors, with reactor volumes of a few cubic centimeters. Such small reactors cannot be practically operated as moving bed reactors, and hence these reactions are carried out in fixed bed reactors. The formation of coke deposits which are not removed like in a moving bed reactor, however, make it difficult to translate results of small lab-scale tests using fixed-bed reactors to factory-scale moving-bed reactors. This is even more so as the partial inactivation over time not only results in lower yield (e.g. as expressed by C5+) but also results in dropping RON-numbers of the product stream, which are generally off-set by increasing reactor temperatures, as the target is a high and stable RON-number for the product stream over time. The so-called iso-RON operation is achieved by using an automated feedback loop between the GC analysis of the effluent and the reactor's temperature which is thus continuously adjusted.

Hence, there is a need for a process for evaluating on a small scale (e.g. reactors of a few cubic centimeters volume) catalyst performance of catalysts used in refinery reforming processes for converting naphtha to gasoline, which process takes into account the coke or carbon deposits formed on the catalyst particles and its effect on RON and yield of a target product (e.g. C5+ or aromatics). Preferably, the process should be such that multiple catalysts can be evaluated jointly in parallel to compare their performance. It is preferred that catalyst performance of multiple catalysts can be compared at the same coke deposition amount.

In CN109 201 093 A a method is disclosed for evaluating the reforming reaction performance of a catalyst at certain operating conditions, wherein the temperature is adjusted so as to maintain a target RON.

### Summary of the invention

It has now been found that the above objective can be met, at least in part, by a process for estimating catalyst performance (hereafter: the estimation process) of catalyst used in refinery reforming processes for converting naphtha to gasoline (hereafter: the naphta reforming process), in which naphtha reforming process coke deposits are formed on the catalyst particles, which estimation process comprises:
a. conducting at least two catalytic reactions in parallel with the same catalysts in the same amounts in at least two parallel reactors, the catalysts being present as particulate matter in a fixed bed in these at least two reactors, these at least two reactors being operated at equal conditions for LHSV, pressure, and feed composition, the feed comprises naphtha and hydrogen, and the reactions in these at least two reactors being carried out for a different reaction time,
b. conducting the reactions under a. at a temperature that achieves a target RON, and adjusting the temperature during the reaction time to maintain said target RON during the reaction time under a., the temperature for the reactions with the same catalysts being adjusted to the same extent, and recording the reaction temperature required over at least 10 measuring points over the longest reaction time (to give a temperature - time relationship),
c. measuring catalyst performance as expressed by yield of a target product for each of the catalytic reactions under a. over at least 10 measuring points over the reaction time for each of the reactions (to give a yield -time relationship),
d. terminating the catalytic reactions under a., wherein the at least two reactions are terminated after a different reaction time, and measuring the coke deposition on the catalyst particles and establishing the relationship of coke deposition as a function of reaction time for the catalyst used (to give a coke deposition - time relationship),
e. using the temperature - time relationship of b., the yield - time relationship of c., and the coke deposition - time relationship of d. to calculate a yield - temperature relationship at a given coke deposition percentage.

It was found that by using the above estimation process various naphtha reforming catalysts could be compared in fixed bed reactors, despite coke formation over the reaction time (which differs per catalyst). The estimation process of this invention provides an estimation of a catalyst performance in moving bed CCR reactors even though such reactors operate at a steady state coke deposit percentage. Moreover, the method allows small scale testing.

### Detailed description of the invention

In the process according to the present invention, in step d. it is to be understood that for a given catalyst a reaction should be carried out for different lengths of time to obtain several datapoints over a stretch of time. Since the amount of code deposition can only be carried out after terminating the reaction, the number of datapoints for the coke deposition -time relationship is limited to at most the number of reactions carried out. For this reason, in the process according to the invention it is specified under a. that there should be at least two reactions being carried out for different lengths of time. In order to collect more datapoints for coke deposition over time, preferably the "at least two" under a. is "at least three", more preferably "at least four".

In the estimation process according to the present invention, it is stated for stage b of said process: "adjusting the temperature during the reaction time to maintain said target RON during the reaction time under a. for each of the reactions, the temperature for the reactions with the same catalysts being adjusted to the same extent". The background for this is that coke formation or coke deposits on the catalyst affect the activity or selectivity, and this generally means that coke formation over time results in lower RON over time for the products produced. This reduction in RON is undesired for the simulation, as this does not occur on the production scale due to a regenerator tower. To offset such reduction in RON, the temperature can be increased. As the rate of coke formation or -deposits (and hence the reduction over time in RON) is the same in reactions when the catalyst is the same (for the parallel reactions that differ only in duration), the temperature increase to offset the reduction in RON over time, needs to be the same for identical catalyst tested in parallel.

For the temperature - time relationship of b. of the process of the invention, the yield - time relationship of c. of the process of the invention, datapoints can be collected on-line during the reaction, and hence for these two at least 5, preferably at least 10, more preferably at least 20 datapoints are collected. It is stated that the reaction temperature is recorded over at least 10 measuring points over the longest reaction time (to establish a temperature - time relationship). For a given catalyst, which is used in at least two parallel reactions which are carried out for a different duration, but otherwise under identical conditions (e.g. reactants, pressure, temperature) for the catalyst, there is one reaction which is carried out for a duration of t1 minutes, and at least one reaction carried out for longer than t1 minutes. Then for the reaction carried out the longest, there should be at least 5, preferably at least 10, more preferably at least 20 datapoints collected that show a reaction time - temperature relationship. As reactions are carried out for the same catalyst in parallel the same temperatures are used for the same catalysts, even if the reaction is carried out for a shorter duration (say t1 minutes) the same time-temperature relationship exists, albeit for a shorter duration. In a more concrete example: wherein for one catalyst species X a reaction is carried out in three parallel reactors for 50 minutes (reactor 1), 100 minutes (reactor 2) and 150 minutes (reactor 3), the temperature is increased for all three reactors in the same way to maintain the target RON (as for each reactor the catalyst activity will reduce in to the same extent at the same time due to coke formation, as conditions are the same, resulting in a drop in RON over time if the temperature would not be increased). Put differently, the three reactions in this example are carried out identical, but for reactor 1 and reactor 2 the reaction is terminated earlier. For reactor 3 the temperature is recorded e.g. every 10 minutes, which gives 15 t-T datapoints for reactor 3. For reactor 2 and reactor 1 there are less datapoints (10, and 5, respectively) but for this more limited time they follow the same t-T relationship.

In the small-scale estimation process according to the present invention, coke formation and deposition on catalyst particles occurs, similar as in large scale naphta reforming plants. However, by carrying out at least two catalytic naphta reforming reactions in parallel, under the same conditions (aimed for constant RON, so increasing temperature usually over time) except for reaction duration, catalyst particles are obtained after stopping the reaction with different amounts of coke deposits. The catalyst particles from the reactor that was on stream longest will contain more coke deposits usually than the catalyst particles that were used in reactions which were stopped earlier.

Directly measured in the present process during the reactions are e.g. the temperature that is required for maintaining the target RON (temperature needs to be increased, due to coke deposition) yield of a target product (e.g. C5+ hydrocarbons, or certain aromatics, or other). The yield can be measured e.g. on-line with GC. This temperature and yield change over time can be recorded. Hence, temperature -time datapoints and yield -time datapoints can be recorded.

Coke deposition is not measured on-line (such is not possible whilst the reactions are ongoing) but after the last reaction is terminated (i.e. with the longest duration). Coke deposition can be measured in various ways, e.g. by thermogravimetric analysis (TGA), on particles after removal from the reactor or whilst they are still on the reactor. For each sample analyzed one gets a percentage coke deposition related to the time the reactors were on stream and active. This gives for each catalyst type multiple datapoints of coke deposition (e.g. as a percentage) and the time the catalysts has been active in the reaction that led to the coke deposition recorded. Hence, this gives a coke deposition (amount or percentage) - reaction time relationship.

By comparing various effects or properties over time (yield of a target, temperature required for maintaining constant RON, coke deposition) other relationships can be derived (e.g. using interpolation) like yield vs coke deposition, or temperature vs. coke deposition, or performance at a fixed coke deposition. This can be desired, as often large refineries operate their CCR refineries at a set coke deposition, as e.g. the factory or procedures are geared to such. Thus, the estimation process according to the present invention this may give good insight in the performance of a catalyst under the conditions that a certain factory desires.

As mentioned, there should be at least two reactions carried out with the same catalyst and under the same conditions, except for a different duration. It will be clear that the more datapoints there are the more reliable the estimation will be. Hence, it may be desired that the number of reactions carried out in parallel in step a. under the conditions therein is at least three, preferably at least four.

Such parallel reactions on small scale (small reactor volumes) may be carried out easily with equipment as known under the Flowrence trademark as marketed by Avantium, and such are described in EP 1256377, EP 1888224, EP 3074121. Such equipment may have 4, 8 or even 16 reactors that are operated in parallel. Hence, when equipment is used having four parallel reactors typically one catalyst can be tested in one run, with four different reaction times. Equipment with e.g. 8 reactors operated in parallel may allows such for eight different reaction times, or may be used to test two different catalysts side by side, if the equipment allows the temperature for one group of four reactors to be controlled on a different control than the other group of four reactors. With such set-up quick and efficient testing of several different CCR catalysts can be tested in a short time frame. Hence, it may be preferred in the preset invention that the steps a., b., and c. are conducted in parallel or sequential (preferably parallel) for at least two, preferably at least three, more preferably at least four different catalysts. Also, it may be preferred that in the process according to the present invention steps a, b and c, are conducted under different operating conditions in parallel for a catalyst, e.g. when different target products are in focus or performance for different RON targets are being compared. As an example, doing the estimation process in 4 reactors in parallel with two reactor with catalyst A at a target RON = 102 and two reactors with catalyst A at target RON = 100.

As mentioned, the reactors for each single catalyst are operated for a different reaction time (to get multiple datapoints, unless reactions are carried out on purpose double. Carrying out the reaction for different lengths of time may be achieved by several measures, but a suitable one is to start the parallel reactions at the same time (e.g. by entering the liquid feed for all reactors into the reactors at the same time), and to terminate one after the other. There may be several ways to terminate the reactor and continuing operating the others, e.g. by cooling of the reactors, by terminating flow in of liquid reactant, or both. Hence, in the present invention it is preferred that the reactions of step a. in the at least two reactors are carried out at different reaction times by terminating at different times the feed of liquid reactants to the reactors.

As in commercial CCR reforming units, the estimation process of the present invention is operated such that it is aimed for a desired target of component (or groups of components), to be produced in preferably a high yield. Typically, CCR reforming processes are aimed at producing relatively high amounts of hydrocarbons having 5 or more carbon atoms (herein referred to as C5+), or producing relatively high amounts of aromatics, or another target product. Hence, in the present invention it is preferred that the target product is C5+ (the sum of hydrocarbon molecules with at least 5 carbon atoms) or the sum of aromatic components or the combination thereof. The yield in this can be yield as is at a given time or it can be a cumulative yield. The latter may be preferred for some CCR operations.

In the estimation process according to the present invention, the yield typically is stable for a certain period after starting, and then decreases over time as coke deposits start to be formed. In commercial CCR operations the catalyst is recycled continuously and hence yield of a target component and average coke deposit can usually be maintained fairly well. This is a difference of the now claimed estimation process and commercial CCR operations. By obtaining the various relationships over time (e.g. yield, temperature to maintain a set RON, deposited amount of coke) the performance or behavior of a catalyst can be estimated by the process of the present invention, in particular w.r.t. yield at a specified coke deposition amount. Processing the information can be done by computer and/or graphically, and usually involves interpolation between measurement points. Hence, it can be preferred that the relationships under one or more of b, c, d, e, are obtained by interpolation.

The estimation process according to the present invention is preferably run for a considerable time to give reliable results. As reactions are for CCR operations and the present estimation process are designed to deliver a predetermined RON number, it is preferred that the reactions under a., b., and c. of the estimation process are carried out for a duration of at least 40 hours, preferably at least 60 hours, more preferably at least 80 hours.

It will be clear that the more datapoints there are for RON, yield, and temperature the more reliable interpolation and results will be. Hence, it is preferred in the present invention that the measurements for RON, yield and temperature over the longest reaction time include at least 20, preferably at least 40 datapoints, for each of RON, yield and temperature, over time.

Reactions in the present invention generally start at a coke deposition of 0%, and may continue to about 10% (weight of coke as determined by TGA on weight of catalyst. Typically, commercial CCR operations are done with e.g. 4-6% coke deposition. Hence, in the now claimed process, it is preferred that the longest reaction time is chosen such that coke deposition (which starts at 0%) builds up to an amount between 2 and 10%, and more preferably between 3 and 7% at the end of such reaction time. Clearly, for the tests run in parallel with the same catalysts and same conditions but for a shorter duration, such coke deposition (when the reaction is terminated) will be less.

Apart from providing a performance of yield at a given coke deposition and for the reactor temperature that would go with this in the CCR unit, the results may also be reworked to provide a temperature - coke deposition relation and/or yield of a target product-coke deposition relation. Hence, it may be preferred that in the process of the present invention, for each catalyst the relation reactor temperature - coke deposition relation is determined. And likewise, it may be preferred that for each catalyst the relation yield of a target product - coke deposition relation is determined.

### Example

Three commercial Naphtha reforming catalysts, designated as A, B and C, were evaluated in a high-throughput parallel testing equipment featuring 16 reactors. For each catalyst, 0.6ml of material was loaded in three identical reactors. The total 12 reactors were operated simultaneously in a single experiment. At any point in time, all 12 reactors saw the same pressure and hydrogen flow rate. The operating conditions for this example are presented in Table 1

**Table 1**

| | |
|---|---|
| LHSV (h⁻¹) | 1.55 |
| H₂/HC (mol/mol) | 2 |
| P (bar.g) | 4.6 |
| RON target | 103 |

The effluent product was fully analyzed by gas chromatography. The product composition (including: C5+ yield, total aromatic yield and hydrogen yield) and properties (including: Research Octane Number were determined from the combination of the individual components quantified by GC. In particular, the RON value was determined from the product composition, based on an empirical relationship previously derived between the composition of catalytically reformed naphtha samples as determined by GC, and actual engine knock-test results.

Each reactor was sequentially analyzed by the GC with a frequency of around 9 hours between two measurements of the same reactor. After each measurement, an algorithm based on PID principle, automatically adjusted the temperature of the corresponding reactor such that the resulting RON value would continuously approach the RON target.

During the test, each of the three reactors per catalysts were consecutively brought off-stream at three specific times along the length of the test. The reactors were individually brought off-stream by interrupting the flow of the liquid (Naphtha), and lowering the temperature to around 360°C. All the reactors continued to see the same reactor pressure and hydrogen flow rate.

GC analysis of the reactors now off stream confirmed that no more catalytically reformed Naphtha was being produced from these reactors.

The experiment was brought to an end when the last reactor(s) was (were) brought off-stream. At this point, the spent catalysts were individually removed from the reactors to be analyzed for coke content.

Analysis of the coke proceeded by crushing all the beads per reactor into a fine, homogeneous powder. Two samples of ca. 15 to 20mg of powder were taken and analyzed by Thermogravimetric Analysis (TGA), by applying a constant flow of Air over the sample, while ramping up the temperature of the crucible by 10°C per minute between room temperature and 800°C.

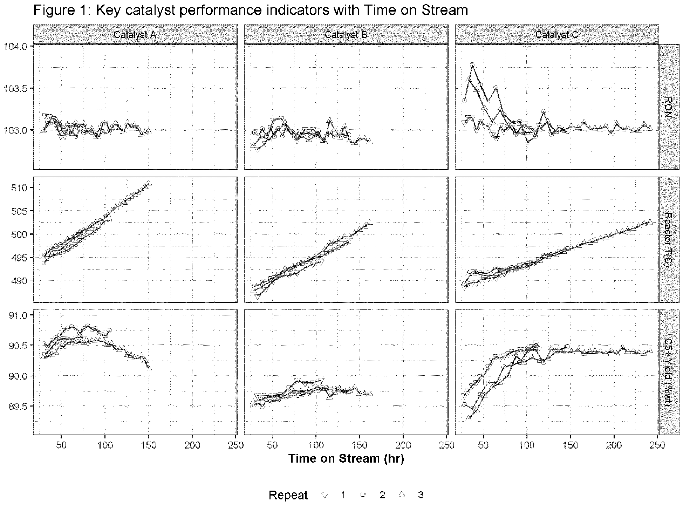

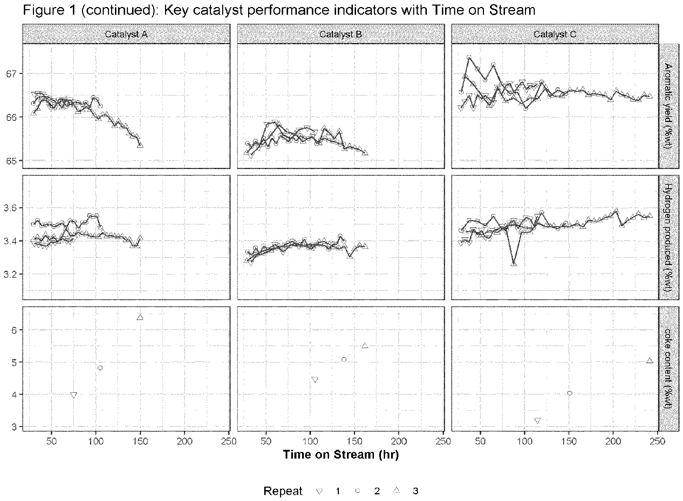

The resulting weight loss recorded during the analysis corresponds to the amount of coke that was burned-off from the surface of the catalysts after correction for the usual amount of water loss and annealing that typically occurs with these materials. For this, the weight loss between around 260 - 550°C was determined, since below 260°C it is just water loss. We corrected for the annealing loss by subtracting the curve of a fresh sample of the same catalyst. Figure 1 gives the results with time on stream for all 3 catalysts (each line is a reactor and corresponds to a coke value).

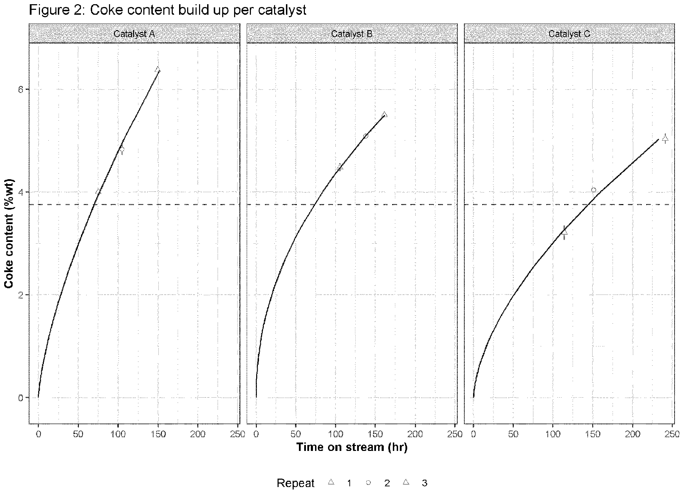

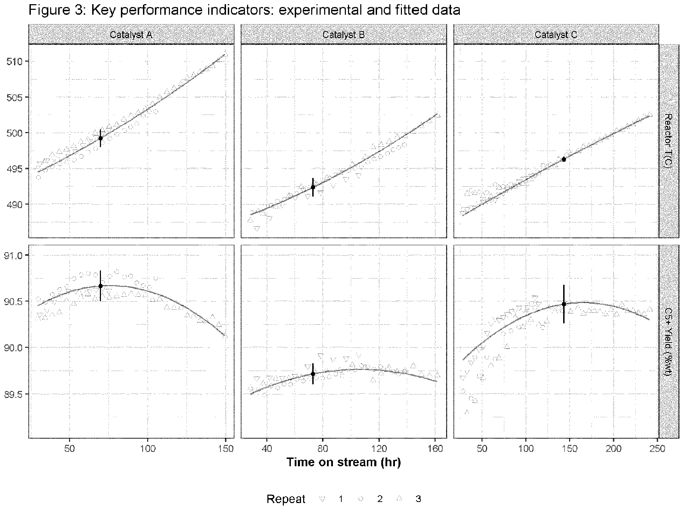

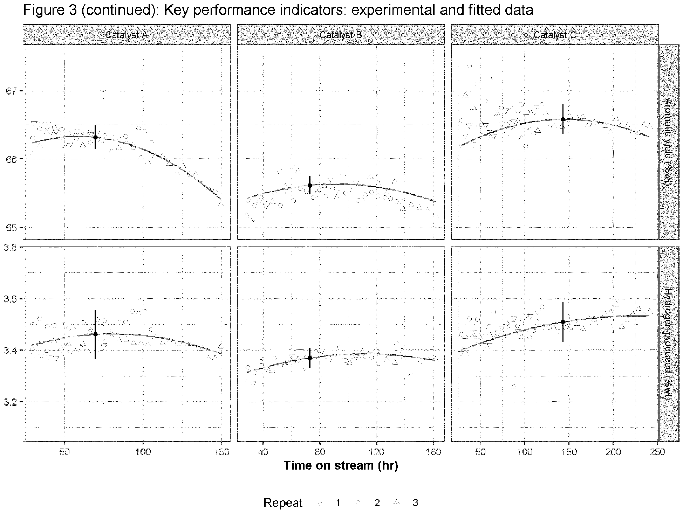

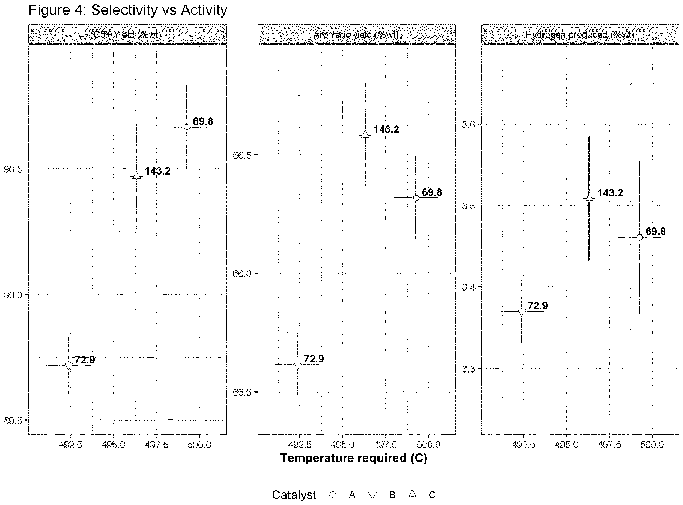

The coke build-up on the catalysts usually follows a power function with time on stream, as long as the catalyst deactivation is not left to continue beyond what is typically considered reasonable. The three points of coke with time on stream, which were obtained for each catalyst by post-mortem TGA analysis, were fitted with time and the equations in **Fout! Verwijzingsbron niet gevonden.** were obtained, and the results are set out in figure 2 (experimental coke points with minimum-maximum error bars from the duplicate coke measurements, fitted curves, and a horizontal line which is the coke target for interpolation). The time on stream corresponding to the coke target (here 3.75%wt) was calculated from these equations. The target coke content was not reached at the same time for all the catalysts.

**Table 2**

| Catalyst | Coke = f(t) equations | Interpolated time to coke target (hr) |
|---|---|---|
| A | coke content (%wt) = 0.208 * *ToS*(*h*)^{0.681} | 69.8 |
| B | coke content (%wt) = 0.478 * *ToS*(*h*)^{0.480} | 72.9 |
| C | coke content (%wt) = 0.187 * *ToS*(*h*)^{0.604} | 143.2 |

Catalyst performance (including reactor temperature, C5+ yield, aromatic yield, hydrogen produced) was fitted for each catalyst and variable across all the data points measured in all 3 reactors simultaneously, with a polynomial function with time on stream. For each catalyst, the activity (reactor temperature) and yields were interpolated from these fits at the time on stream required to reach the target coke content as determined earlier. **Fout! Verwijzingsbron niet gevonden.** shows the experimental data, with the fitted curves overlaid. The interpolation point is displayed on the curve with the 95% prediction interval derived from the fit.

Catalyst performance was finally compared at constant coke content by representing the interpolated yields versus the interpolated activity (reactor temperature), as exemplified in **Fout! Verwijzingsbron niet gevonden.** (vertical and horizontal error bars = 95% prediction interval; label = time to coke target, in hours, same value as in table 2).

## Claims

1. Process for estimating catalyst performance, hereafter: the estimation process, of catalyst used in refinery reforming processes for converting naphtha to gasoline, hereafter: the naphta reforming process, in which naphtha reforming process coke deposits are formed on the catalyst particles, which estimation process comprises:
a. Conducting at least two catalytic reactions in parallel with the same catalysts in the same amounts in at least two parallel reactors, the catalysts being present as particulate matter in a fixed bed in these at least two reactors, these at least two reactors being operated at equal conditions for LHSV, pressure, and feed composition, the feed comprises naphtha and hydrogen, and the reactions in these at least two reactors being carried out for a different reaction time,
b. Conducting the reactions under a. at a temperature that achieves a target RON, and adjusting the temperature during the reaction time to maintain said target RON during the reaction time under a., the temperature for the reactions with the same catalysts being adjusted to the same extent, and recording the reaction temperature required over at least 10 measuring points over the longest reaction time to give a temperature -time relationship,
c. Measuring catalyst performance as expressed by yield of a target product for each of the catalytic reactions under a. over at least 10 measuring points over the reaction time for each of the reactions to give a yield - time relationship,
d. terminating the catalytic reactions under a., wherein the at least two reactions are terminated after a different reaction time, and measuring the coke deposition on the catalyst particles and establishing the relationship of coke deposition as a function of reaction time for the catalyst used to give a coke deposition - time relationship,
e. Using the temperature - time relationship of b., the yield - time relationship of c., and the coke deposition - time relationship of d. to calculate a yield - temperature relationship at a given coke deposition percentage.

2. Process according to claim 1, wherein the target product is C5+, C5+ being the sum of hydrocarbon molecules with at least 5 carbon atoms, or the sum of aromatic components or the combination thereof.

3. Process according to claim 1 and 2, wherein the number of reactions carried out in parallel in step a. under the conditions therein is at least three, preferably at least four.

4. Process according to any of the preceding claims, wherein the reactions of step a. in the at least two reactors are carried out at different reaction times by terminating at different times the feed of liquid reactants to the reactors.

5. Process according to any of the preceding claims wherein steps a., b., and c. are conducted in parallel or sequential for at least two, preferably at least three, more preferably at least four different catalysts.

6. Process according to any of the preceding claims, wherein the reactions under a., b., and c. of the estimation process are carried out for a duration of at least 40 hours, preferably at least 60 hours, more preferably at least 80 hours.

7. Process according to any of the preceding claims, wherein the yield is a cumulative yield.

8. Process according to any of the preceding claims, wherein for each catalyst the reactor temperature - coke deposition relation is determined.

9. Process according to any of the preceding claims, wherein for each catalyst the yield of a target product - coke deposition relation is determined.

10. Process according to any of the preceding claims, wherein the relationships under one or more of b, c, d, e, are obtained by interpolation.

## Patentansprüche

1. Verfahren zum Schätzen der Katalysatorleistung, nachstehend: das Schätzungsverfahren, eines Katalysators, der in Raffineriereformierungsverfahren zum Umsetzen von Naphtha in Benzin verwendet wird, nachstehend: das Naphtha-Reformierungsverfahren, wobei Koksablagerungen des Naphtha-Reformierungsverfahrens auf den Katalysatorkörnern gebildet werden, wobei das Schätzungsverfahren umfasst:
a. Ausführen von mindestens zwei katalytischen Reaktionen parallel mit denselben Katalysatoren mit denselben Mengen in mindestens zwei parallelen Reaktoren, wobei die Katalysatoren als Partikel in einem festen Bett in diesen mindestens zwei Reaktoren vorhanden sind, wobei diese mindestens zwei Reaktoren unter gleichen Bedingungen für LHSV, Druck und Feed-Zusammensetzung betrieben werden, wobei das Feed Naphtha und Wasserstoff umfasst, und die Reaktionen in diesen mindestens zwei Reaktoren für eine unterschiedliche Reaktionszeit durchgeführt werden,
b. Ausführen der Reaktionen unter a. bei einer Temperatur, die eine Ziel-RON erreicht, und Anpassen der Temperatur während der Reaktionszeit, um die Ziel-RON während der Reaktionszeit unter a zu halten, wobei die Temperatur für die Reaktionen mit denselben Katalysatoren in demselben Ausmaß angepasst wird, und Aufzeichnen der Reaktionstemperatur, die benötigt wird, über mindestens 10 Messpunkte über die längste Reaktionszeit, um eine Temperatur-Zeit-Beziehung anzugeben,
c. Messen der Katalysatorleistung, ausgedrückt durch Ausbeute eines Zielprodukts für jede der katalytischen Reaktionen unter a. über mindestens 10 Messpunkte über die Reaktionszeit für jede der Reaktionen, um eine Ausbeute-Zeit-Beziehung anzugeben,
d. Beenden der katalytischen Reaktionen unter a., wobei die mindestens zwei Reaktionen nach einer unterschiedlichen Reaktionszeit beendet werden, und Messen der Koksablagerung auf den Katalysatorkörnern und Herstellen der Beziehung der Koksablagerung in Abhängigkeit von der Reaktionszeit für den Katalysator, der verwendet wird, um eine Koksablagerung-Zeit-Beziehung anzugeben,
e. Verwenden der Temperatur-Zeit-Beziehung von b., der Ausbeute-Zeit-Beziehung von c. und der Koksablagerung-Zeit-Beziehung von d., um eine Ausbeute-Temperatur-Beziehung bei einem gegebenen Koksablagerungsprozentsatz zu berechnen.

2. Verfahren nach Anspruch 1, wobei das Zielprodukt C5+ ist, wobei C5+ die Summe von Kohlenwasserstoffmolekülen mit mindestens 5 Kohlenstoffatomen oder die Summe von aromatischen Komponenten oder die Kombination davon ist.

3. Verfahren nach Anspruch 1 und 2, wobei die Anzahl von Reaktionen, die in Schritt a. unter den Bedingungen hierin parallel durchgeführt wird, mindestens drei, vorzugsweise mindestens vier, ist.

4. Verfahren nach einem der vorstehenden Ansprüche, wobei die Reaktionen von Schritt a. in den mindestens zwei Reaktoren bei unterschiedlichen Reaktionszeiten durch Beenden, bei unterschiedlichen Zeiten, des Feeds von flüssigen Reaktanten an die Reaktoren durchgeführt werden.

5. Verfahren nach einem der vorstehenden Ansprüche, wobei die Schritte a., b. und c. für mindestens zwei, vorzugsweise mindestens drei, mehr bevorzugt mindestens vier, unterschiedliche Katalysatoren parallel oder sequentiell ausgeführt werden.

6. Verfahren nach einem der vorstehenden Ansprüche, wobei die Reaktionen unter a., b. und c. des Schätzungsverfahrens für eine Dauer von mindestens 40 Stunden, vorzugsweise mindestens 60 Stunden, mehr bevorzugt mindestens 80 Stunden, durchgeführt werden.

7. Verfahren nach einem der vorstehenden Ansprüche, wobei die Ausbeute eine kumulative Ausbeute ist.

8. Verfahren nach einem der vorstehenden Ansprüche, wobei für jeden Katalysator die Reaktortemperatur-Koksablagerung-Relation bestimmt wird.

9. Verfahren nach einem der vorstehenden Ansprüche, wobei für jeden Katalysator die Ausbeute einer Zielprodukt-Koksablagerung-Relation bestimmt wird.

10. Verfahren nach einem der vorstehenden Ansprüche, wobei die Beziehungen unter einem oder mehreren von b, c, d, e durch Interpolation erhalten werden.

## Revendications

1. Procédé permettant d'estimer une performance de catalyseur, ci-après : le procédé d'estimation, d'un catalyseur utilisé dans des procédés de reformage de raffinerie permettant de convertir du naphte en essence, ci-après : le procédé de reformage de naphte, dans lequel des dépôts de coke de procédé de reformage de naphte sont formés sur les particules de catalyseur, lequel procédé d'estimation comprend :
a. l'exécution d'au moins deux réactions catalytiques en parallèle avec les mêmes catalyseurs dans les mêmes quantités dans au moins deux réacteurs parallèles, les catalyseurs étant présents sous forme de matière particulaire dans un lit fixe dans ces au moins deux réacteurs, ces au moins deux réacteurs étant mis en fonctionnement dans des conditions égales pour la VSHL, la pression et la composition d'alimentation, l'alimentation comprend du naphte et de l'hydrogène, et les réactions dans ces au moins deux réacteurs étant effectuées pendant un temps de réaction différent,
b. l'exécution des réactions en a. à une température qui réalise un RON cible, et l'ajustement de la température pendant le temps de réaction pour maintenir ledit RON cible pendant le temps de réaction en a., la température pendant les réactions avec les mêmes catalyseurs étant ajustée dans la même mesure, et l'enregistrement de la température de réaction requise sur au moins 10 points de mesure sur le temps de réaction le plus long pour donner une relation température-temps,
c. la mesure de performance de catalyseur telle qu'exprimée par un rendement d'un produit cible pour chacune des réactions catalytiques en a. sur au moins 10 points de mesure sur le temps de réaction pour chacune des réactions pour donner une relation rendement-temps,
d. l'achèvement des réactions catalytiques en a., dans lequel les au moins deux réactions sont achevées après un temps de réaction différent, et la mesure du dépôt de coke sur les particules de catalyseur et l'établissement de la relation du dépôt de coke en fonction du temps de réaction pour le catalyseur utilisé pour donner une relation dépôt de coke-temps,
e. l'utilisation de la relation température-temps de b., de la relation rendement-temps de c., et de la relation dépôt de coke-temps de d. pour calculer une relation rendement-température à un pourcentage de dépôt de coke donné.

2. Procédé selon la revendication 1, dans lequel le produit cible est C5+, C5+ étant la somme de molécules d'hydrocarbure avec au moins 5 atomes de carbone, ou la somme de composants aromatiques ou la combinaison de ceux-ci.

3. Procédé selon la revendication 1 et 2, dans lequel le nombre de réactions effectuées en parallèle à l'étape a. dans les conditions dans celle-ci est d'au moins trois, de préférence au moins quatre.

4. Procédé selon l'une quelconque des revendications précédentes, dans lequel les réactions de l'étape a. dans les au moins deux réacteurs sont effectuées à des temps de réaction différents en achevant à différents moments l'alimentation de réactifs liquides vers les réacteurs.

5. Procédé selon l'une quelconque des revendications précédentes dans lequel les étapes a., b. et c. sont exécutées en parallèle ou séquentiellement pour au moins deux, de préférence au moins trois, plus préférablement au moins quatre catalyseurs différents.

6. Procédé selon l'une quelconque des revendications précédentes, dans lequel les réactions en a., b. et c. du procédé d'estimation sont effectuées pendant une durée d'au moins 40 heures, de préférence au moins 60 heures, plus préférablement au moins 80 heures.

7. Procédé selon l'une quelconque des revendications précédentes, dans lequel le rendement est un rendement cumulatif.

8. Procédé selon l'une quelconque des revendications précédentes, dans lequel pour chaque catalyseur la relation température de réacteur-dépôt de coke est déterminée.

9. Procédé selon l'une quelconque des revendications précédentes, dans lequel pour chaque catalyseur le rendement d'une relation produit cible-dépôt de coke est déterminé.

10. Procédé selon l'une quelconque des revendications précédentes, dans lequel les relations dans un ou plusieurs parmi b, c, d, e, sont obtenues par interpolation.
